# EUROPÄISCHE PATENTANMELDUNG

(11) **EP 1 359 734 A1**
(43) Veröffentlichungstag der Anmeldung: **05.11.2003**
(21) Anmeldenummer: 02009985.9
(22) Anmeldetag: 03.05.2002
(51) Int. Cl.: H04M 1/725, H04Q 7/32

(54) **Verfahren zur Auswahl einer akustischen Signalfolge für ein Kommunikationsendgerät und Kommunikationsendgerät dafür**

(71) Anmelder: SIEMENS AKTIENGESELLSCHAFT, 80333 München (DE)
(72) Erfinder: Aubauer, Roland, Dr., 46395 Bocholdt (DE); Klinke, Stefano Ambrosius, Dr., 40489 Düsseldorf (DE)

(57) **Zusammenfassung**

Bei einem Verfahren zur Auswahl einer akustischen Signalfolge, die einer bestimmten Funktion eines mobilen Kommunikationsendgerätes zugeordnet ist, aus einer Mehrzahl vorbestimmter akustischer Signalfolgen wird die Aufgabe, den Auswertprozess zu vereinfachen, dadurch gelöst, dass in dem Verfahren die Schritte vorgesehen sind:
a) Aufnehmen einer benutzerspezifischen akustischen Signalfolge,
b) Vergleichen der benutzerspezifischen akustischen Signalfolge mit wenigstens einem Teil der vorbestimmten akustischen Signalfolgen und
c) Auswählen derjenigen akustischen Signalfolge der vorbestimmten akustischen Signalfolgen, die mit der benutzerspezifischen akustischen Signalfolge in bezug auf wenigstens ein akustisches Signalparameter, das für eine akustische Signalfolge charakteristisch ist, die größte Übereinstimmung zeigt.

Gegenstand der Erfindung ist außerdem ein Kommunikationsendgerät, das zur Durchführung des Verfahrens ausgebildet ist.

## Beschreibung

Die Erfindung bezieht sich auf ein Verfahren zur Auswahl einer akustischen Signalfolge, die einer bestimmten Funktion eines mobilen Kommunikationsendgerätes zugeordnet ist, aus einer Mehrzahl vorbestimmter akustischer Signalfolgen sowie auf ein Kommunikationsendgerät, das zur Durchführung eines solchen Verfahrens ausgebildet ist.

Bei einem solchen Verfahren werden bisher die akustischen Signalfolgen, wie beispielsweise Klingeltöne eines mobilen Kommunikationsendgerätes, mit Hilfe einer textbasierten Suche ausgewählt. Beispielsweise kann ein Benutzer eines mobilen Kommunikationsendgerätes aus einer Liste von Klingeltönen, die auch über das Internet zugänglich sein kann, bestellen. Der bestellte bzw. ausgewählte Klingelton wird dann an den Benutzer beispielsweise per Kurzmitteilung (SMS) geschickt und anschließend vom Benutzer als Klingelton auf sein mobiles Kommunikationsendgerät geladen.

Der Nachteil eines solchen Verfahrens besteht darin, dass für den Benutzer die Liste möglicher Klingeltöne als akustische Signalfolgen nur mit Hilfe eines anderen Kommunikationsmittels, wie dem Internet oder Zeitungen, zugänglich ist. Aus diesem Grunde ist das Beschaffen des gewünschten Klingeltons recht aufwendig und kann insbesondere nicht allein mit dem mobilen Kommunikationsendgerät des Benutzers verwirklicht werden.

Auch die Suche selbst, die beispielsweise auf Interpretennamen, Musiktiteln oder ähnlichem basiert, gestaltet sich sehr aufwendig.

Ausgehend hiervon liegt der Erfindung die Aufgabe zugrunde, eine vereinfachtes Verfahren zum Auswählen einer akustischen Signalfolge, die einer bestimmten Funktion eines mobilen Kommunikationsendgerätes zugeordnet ist und ein Kommunikationsendgerät zur Durchführung des Verfahrens, bereit zu stellen.

Diese Aufgabe wird durch das Verfahren nach Anspruch 1 bzw. das Kommunikationsendgerät nach Anspruch 10 gelöst.

In dem Schritt a) wird eine benutzerspezifische akustische Signalfolge aufgenommen, bei der es sich beispielsweise um eine gesungene Melodie, aber auch um ein über einen CD-Spieler oder ein anderes akustisches Wiedergabegerät abgespieltes Musikstück handeln kann. Diese benutzerspezifische akustische Signalfolge soll die Basis für die Auswahl der akustischen Signalfolge sein, die der Benutzer einer bestimmten Funktion seines mobilen Kommunikationsendgerätes zuordnen möchte. Bei dieser Funktion kann es sich beispielsweise um die Ruffunktion (Klingelton) des Gerätes handeln. Auch andere Funktionen eines mobilen Kommunikationsendgerätes, wie die Anzeige des Empfangs einer SMS oder einer E-Mail kommen für eine Zuordnung zu einer in der beschriebenen Weise ausgewählten akustischen Signalfolge in Frage.

In dem Schritt b) wird die aufgenommene benutzerspezifische akustische Signalfolge mit wenigstens einem Teil der vorbestimmten akustischen Signalfolgen, die üblicher Weise in einer Datenbank gespeichert sein werden, verglichen.

In dem Schritt c), bei dem diejenige akustische Signalfolge der vorbestimmten akustischen Signalfolgen ausgewählte wird, die mit der benutzerspezifischen akustischen Signalfolge in bezug auf wenigstens einen akustischen Signalparameter, der für eine akustische Signalfolge charakteristisch ist, die größte Übereinstimmung zeigt, wird das Ergebnis aufgrund des Schrittes b) gebildet. Dabei ist es von Bedeutung, dass als akustischer Signalparameter eine Messgröße gewählt wird, die akustische Eigenschaften der Signalfolgen besonders gut wiedergeben kann. Ein Beispiel für einen solchen Signalparameter ist der zeitliche Verlauf der akustischen Frequenzen einer akustischen Signalfolge.

Bevorzugt wird in dem Schritt a) zur Aufnahme der benutzerspezifischen akustischen Signalfolge ein Mikrofon des mobilen Kommunikationsendgerätes verwendet, wobei die benutzerspezifische akustische Signalfolge gespeichert wird. Die benutzerspezifische akustische Signalfolge kann entweder identisch oder aber in Form von Messwerten für charakteristische Merkmale der Signalfolge gespeichert sein.

Die Speicherung der akustischen Signalfolge kann sowohl im mobilen Kommunikationsendgerät selbst erfolgen, als auch in einem externen Datenverarbeitungsgerät, das zur Durchführung der Schritte b) und c) vorgesehen wird. Im letzterem Fall wird die benutzerspezifische akustische Signalfolge entweder selbst oder charakteristische Merkmale davon an die externe Datenverarbeitungseinheit übermittelt. Charakteristische Merkmale der benutzerspezifischen akustischen Signalfolge sind beispielsweise Tonhöhen, Länge der einzelnen Töne und Länge von Pausenintervallen zwischen einzelnen Tönen. Selbstverständlich ist in diesem Fall eine Kommunikationsverbindung zwischen dem mobilen Kommunikationsendgerät und der externen Datenverarbeitungseinrichtung vorgesehen.

Weitere bevorzugte Ausführungsformen des erfindungsgemäßen Verfahrens ergeben sich aus den Unteransprüchen 3 bis 9. Dabei ist hervorzuheben, dass die Schritte b) und c) sowohl ausschließlich auf dem mobilen Kommunikationsendgerät, ausschließlich auf einem dem Kommunikationsendgerät zugeordneten Server oder auch teilweise auf dem Kommunikationsendgerät und teilweise auf dem Server durchgeführt werden können.

Gegenstand der Erfindung ist außerdem ein Kommunikationsendgerät mit
- einer Aufnahmeeinrichtung für eine akustische Signalfolge,
- einem Speicher, der einer Mehrzahl vorbestimmter akustischer Signalfolgen zugeordnet ist,
dadurch gekennzeichnet,
dass der Speicher Messwerte für wenigstens einen Signalparameter enthält, der für eine akustische Signalfolge charakteristisch ist, eine Einrichtung zum Extrahieren von Messwerten für den charakteristischen Signalparameter vorgesehen ist und eine Auswähleinrichtung vorgesehen ist, die aufgrund eines Vergleichs der Messwerte des charakteristischen Signalparameters für die benutzerspezifische akustische Signalfolge und die vorbestimmten Signalfolgen eine bestimmte vorbestimmte Signalfolge auswählt.

Ein solches Kommunikationsendgerät dient zur Durchführung des oben beschriebenen Verfahrens allein auf einem Kommunikationsendgerät.

Ausführungsbeispiele der Erfindung werden nachfolgend noch näher erläutert.

### Beispiel 1)

Ein Benutzer eines mobilen Kommunikationsendgerätes wünscht, eine von ihm selbst bevorzugte Melodie als akustische Signalfolge bei seinem mobilen Kommunikationsendgerät als Klingelton einzurichten. Der Benutzer summt die gewünschte, benutzerspezifische akustische Signalfolge, die von dem mobilen Kommunikationsendgerät über ein standardmäßig vorhandenes Mikrofon aufgenommen wird. Von der akustischen Signalfolge, die auf dem mobilen Kommunikationsendgerät gespeichert wird, werden charakteristische akustische Signalparameter extrahiert, wie beispielsweise eine Frequenzfolge und die einzelnen Zeitintervalle die den verschiedenen Frequenzen der Frequenzfolge zugeordnet sind.

Diese zwei Messwerte bzw. Messwertfolgen für die benutzerspezifische akustische Signalfolge werden an einen Server, der dem mobilen Kommunikationsendgerät zugeordnet ist, übertragen. Diese Zuordnung ist darauf beschränkt, dass eine Kommunikationsmöglichkeit zwischen dem Server und dem mobilen Kommunikationsendgerät gegeben ist oder sich einrichten lässt. Eine Übermittlung der Signalparameter kann beispielsweise mittels einer Kurzmitteilung oder einer elektronischen Mitteilung erfolgen.

Nunmehr wird auf dem Server anhand der Messwertfolgen für die Signalparameter aus einer Mehrzahl vorbestimmter akustischer Signalfolgen diejenige ausgewählt, die der als Klingelton gewünschten Melodie am nächsten kommt. Die ausgewählte akustische Signalfolge wird vom Server aus an das mobile Kommunikationsendgerät übertragen, beispielsweise wiederum mittels einer Kurzmitteilung oder elektronischer Mitteilung.

### Beispiel 2)

Es wird eine Kommunikationsverbindung zwischen einem mobilen Kommunikationsendgerät und einem Server hergestellt. Mittels eines bestimmten Signals zeigt der Benutzer dem Server an, dass er einen neuen Klingelton für sein mobiles Kommunikationsendgerät auswählen will. Aufgrund dieses Signals wird der Benutzer vom Server aus aufgefordert, die gewünschte akustische Signalfolge/Melodie zu summen oder zu pfeifen. Über ein Mikrofon des mobilen Kommunikationsendgerätes wird die benutzerspezifische Signalfolge aufgenommen und unmittelbar an den Server übermittelt.

Auf dem Server werden, wie in Beispiel 1), Messwerte für charakteristische Signalparameter gewonnen bzw. aus der aufgenommenen Melodie extrahiert. Im Anschluss daran wird wie in Beispiel 1) auf dem Server ein Vergleich zwischen den Messwerten für die benutzerspezifische akustische Signalfolge und den Messwerten für die vorbestimmten akustischen Signalfolgen durchgeführt, und es wird eine Auswahl unter den vorbestimmten akustischen Signalfolgen getroffen. Daraufhin wird die ausgewählte akustische Signalfolge an das mobile Kommunikationsendgerät übertragen und dort als Klingelton eingerichtet.

### Beispiel 3)

Der Benutzer eines mobilen Kommunikationsendgerätes möchte einen Klingelton für sein mobiles Kommunikationsendgerät aktivieren, der dort bereits gespeichert ist. Der Benutzer summt die gewünschte Melodie/akustische Signalfolge, die über ein Mikrofon von dem Kommunikationsendgerät aufgenommen wird.

Wiederum werden Messwerte für charakteristische Signalparameter aufgenommen und das Kommunikationsendgerät selbst sucht aus dem auf ihm gespeicherten Klingeltönen/akustischen Signalfolgen das passende aus.

Abschließend wird die aufgefundene akustische Signalfolge als Klingelton aktiviert.

## Patentansprüche

1. Verfahren zur Auswahl einer akustischen Signalfolge, die einer bestimmten Funktion eines mobilen Kommunikationsendgerätes zugeordnet ist, aus einer Mehrzahl vorbestimmter akustischer Signalfolgen mit den Schritten:
a) Aufnehmen einer benutzerspezifischen akustischen Signalfolge,
b) Vergleichen der benutzerspezifischen akustischen Signalfolge mit wenigstens einem Teil der vorbestimmten akustischen Signalfolgen und
c) Auswählen derjenigen akustischen Signalfolge der vorbestimmten akustischen Signalfolgen, die mit der benutzerspezifischen akustischen Signalfolge in bezug auf wenigstens einen akustischen Signalparameter, der für eine akustische Signalfolge charakteristisch ist, die größte Übereinstimmung zeigt.

2. Verfahren nach Anspruch 1,
bei dem in Schritt a) zur Aufnahme der benutzerspezifischen akustischen Signalfolge ein Mikrofon des mobilen Kommunikationsendgerätes verwendet wird und die benutzerspezifische akustische Signalfolge gespeichert wird.

3. Verfahren nach einem der Ansprüche 1 oder 2,
bei dem in Schritt b) Messwerte des wenigstens einen charakteristischen Signalparameters aus der benutzerspezifischen akustischen Signalfolge extrahiert und mit gespeicherten Messwerten des wenigstens einen charakteristischen Signalparameters für die vorbestimmten akustischen Signalfolgen verglichen werden.

4. Verfahren nach einem der Ansprüche 1 bis 3,
bei dem der Schritt b) in dem mobilen Kommunikationsendgerät durchgeführt wird und die vorbestimmten akustischen Signalfolgen in dem mobilen Kommunikationsendgerät gespeichert sind.

5. Verfahren nach einem der Ansprüche 1 bis 3,
bei dem der Schritt b) in einem dem mobilen Kommunikationsendgerät zugeordneten Server durchgeführt wird, die vorbestimmten akustischen Signalfolgen auf dem Server gespeichert sind und die benutzerspezifische Signalfolge von dem Kommunikationsendgerät zu dem Server übermittelt wird.

6. Verfahren nach einem der Ansprüche 1 bis 4,
bei dem der Schritt c) in dem mobilen Kommunikationsendgerät durchgeführt wird und die vorbestimmten akustischen Signalfolgen in dem mobilen Kommunikationsendgerät gespeichert sind.

7. Verfahren nach einem der Ansprüche 1, 2, 3 oder 5,
bei dem der Schritt c) auf einem dem mobilen Kommunikationsendgerät zugeordneten Server durchgeführt und die ausgewählte vorbestimmte akustische Signalfolge von dem Server an das mobile Kommunikationsendgerät übermittelt wird.

8. Verfahren nach einem der Ansprüche 1 bis 7, bei dem der wenigstens eine charakteristische Signalparameter ein zeitlicher Frequenzverlauf einer akustischen Signalfolge ist.

9. Verfahren nach einem der Ansprüche 5 oder 7, bei dem zwischen dem Kommunikationsendgerät und dem Server zu übermittelnde akustische Signalfolgen per Kurzmitteilung (SMS) oder elektronischer Mitteilung (E-Mail) übermittelt werden.

10. Kommunikationsendgerät mit
- einer Aufnahmeeinrichtung für eine akustische Signalfolge,
- einem Speicher, der einer Mehrzahl vorbestimmter akustischer Signalfolgen zugeordnet ist,
**dadurch gekennzeichnet,**
**dass** der Speicher Messwerte für wenigstens einen Signalparameter enthält, der für eine akustische Signalfolge charakteristisch ist, eine Einrichtung zum Extrahieren von Messwerten für den charakteristischen Signalparameter vorgesehen ist und eine Auswähleinrichtung vorgesehen ist, die aufgrund eines Vergleichs der Messwerte des charakteristischen Signalparameters für die benutzerspezifische akustische Signalfolge und die vorbestimmten Signalfolgen eine bestimmte vorbestimmte Signalfolge auswählt.
